# EUROPÄISCHE PATENTANMELDUNG

(11) **EP 2 077 160 A1**
(43) Veröffentlichungstag der Anmeldung: **08.07.2009**
(21) Anmeldenummer: 09000001.9
(22) Anmeldetag: 01.01.2009
(51) Int. Cl.: B03D 1/14, B01D 17/02, C02F 1/24

(54) **Säulenflotationseinrichtung**

(30) Priorität: 02.01.2008 DE 102008003128
(71) Anmelder: Bellmer Kufferath Machinery gmbh, 52353 Düren (DE)
(72) Erfinder: Krieger, Uwe, Dr., 52355 Düren (DE); Schwarz, Bernhard, 52379 Langerwehe (DE); Römer, Michael, 52080 Aachen (DE); Janus, Karl-Heinz, 52353 Düren-Birkesdorf (DE); Mauer, Gregor, 52382 Niederzier (DE); Sommer, Falk, 52249 Eschweiler (DE)
(74) Vertreter: Schumacher, Bernd

(57) **Zusammenfassung**

Bei einer Säulenflotationseinrichtung mit zumindest zwei übereinander angeordneten Flotationsstufen (10,20,30), die jeweils durch eine in einen zentralen Flotationskamin (18,28,38) mündende und nach außen abwärts geneigte Strömungsleitkontur (14,24,34) voneinander getrennt sind, wird erfindungsgemäß vorgeschlagen, daß die Strömungsleitkontur (14,24,34) aus einem flexiblen Material besteht.

Vorzugsweise ist die Strömungsleitkontur in ihrer Neigungsrichtung mechanisch vorgespannt (52,54,56).

Eine solche Säulenflotationseinrichtung ist sehr wartungsarm und langlebig, weil Verschmutzungen und Anhaftungen an den flexiblen Strömungsleitkonturen durch Bewegungs- bzw. Schwingungsinduzierungen leicht vermieden werden können.

## Beschreibung

Die Erfindung betrifft eine Säulenflotationseinrichtung mit zumindest zwei übereinander angeordneten Flotationsstufen, die jeweils durch eine in einen zentralen Flotationskamin mündende und nach außen abwärts geneigte Strömungsleitkontur voneinander getrennt sind.

Eine solche Säulenflotationseinrichtung arbeitet in jeder Flotationsstufe nach dem Prinzip der Entspannungsflotation. Hierbei handelt es sich um ein bekanntes Verfahren zur Wasser- und Abwasserreinigung, insbesondere zum Entfernen von ungelösten Substanzen (Feststoffen). Durch Zugabe von geeigneten Fällungsmitteln ist auch ein teilweises Abtrennen von gelösten Substanzen möglich. Bei der in zwei Prozeßschritten ablaufenden Entspannungsflotation erfolgt zunächst eine Anlagerung sehr feiner Luftblasen an die Feststoffpartikel einer zu reinigenden Suspension. Danach erfolgt in einem sogenannten Flotationsbehälter ein auf Dichteunterschieden beruhendes Aufschwimmen des aus Feststoff und Luftpartikeln bestehenden Flotats, wobei das schwerere Klarwasser unten abgezogen wird.

Die DE 10308025 A1 beschreibt eine besonders kompakte Bauform einer solchen mehrstufigen Säulenflotationseinrichtung, bei der alle Flotationsstufen in einem einzigen Flotationsbehälter angeordnet sind. Jede Flotationsstufe hat für aufschwimmendes Flotat eine zu ihrer starren Strömungsleitkontur im wesentlich zentrale Austrittsöffnung, die in einen sich vertikal nach oben erstreckenden rohrartigen Flotationskamin mündet. Alle Flotationskamine sind konzentrisch zueinander angeordnet und enden etwa auf gleicher Höhe an der Oberseite der Säulenflotationseinrichtung. Jede Flotationsstufe, die direkt unterhalb einer darüber befindlichen Flotationsstufe angeordnet ist, bildet mit ihrer Strömungsleitkontur gleichzeitig die Unterseite dieser darüber befindlichen Flotationsstufe. Eine solche Säulenflotationseinrichtung hat einen geringen Raumbedarf, einen hohen Wirkungsgrad sowie kleine Wärmeverluste.

Derartige Säulenflotationseinrichtungen haben jedoch eine aufwendigen, stabilen und schweren Aufbau. Außerdem sind die einzelnen Flotationsstufen aufgrund ihrer fehlenden Zugänglichkeit nur schwer zu reinigen, so daß einer gleichbleibenden Reinigungswirksamkeit relativ enge Grenzen gesetzt sind.

Der vorliegenden Erfindung liegt deshalb die Aufgabe zugrunde, eine Säulenflotationseinrichtung dieser Art mit einfachen und preiswerten Maßnahmen so auszubilden, daß sie bei leichterem Aufbau einfacher zu reinigen ist.

Zur Lösung der gestellten Aufgabe zeichnet sich eine Säulenflotationseinrichtung mit zumindest zwei übereinander angeordneten Flotationsstufen, die jeweils durch eine in einen zentralen Flotationskamin mündende und nach außen abwärts geneigte Strömungsleitkontur voneinander getrennt sind, erfindungsgemäß dadurch aus, daß die Strömungsleitkontur aus einem flexiblen Material besteht.

Gegenüber den bisher aus starrem Material bestehenden Strömungsleitkonturen ermöglicht jetzt ihr flexibles Material einen gewichtsreduzierten Aufbau. Die flexiblen Strömungsleitkonturen der einzelnen Flotationsstufen können auf sehr einfache Weise durch vorübergehend materialverformende Maßnahmen wirksam gereinigt werden, wie beispielsweise durch Schwingungsinduzierungen mechanischer, hydraulischer oder pneumatischer Art. Dadurch lösen sich zu Verkrustungen neigende feste Bestandteile von den flexiblen Strömungsleitkonturen. Ein reinigender Wartungseingriff in die Säulenflotationseinrichtung kann somit entfallen, und es wird praktisch wartungsfrei eine dauerhaft gleichbleibende Reinigungswirksamkeit derselben gewährleistet. Grundsätzlich kann diese Technik flexibler Strömungsleitkonturen bei jeder Bauform einer Säulenflotationseinrichtung eingesetzt werden. Besonders große Vorteile ergeben sich aber bei einer Bauform mit mehreren Flotationsstufen in einem Gehäuse, und zwar wegen der hierbei bestehenden schlechteren Zugänglichkeit der Einzelteile.

Gemäß Anspruch 2 ist eine mechanische Vorspannung der Strömungsleitkonturen in ihrer Neigungsrichtung besonders bevorzugt, weil hierdurch eine definierte Formgebung derselben sichergestellt ist, ohne daß hierdurch ihre Verformbarkeit beeinträchtigt wird.

Die Vorspannung der flexiblen Strömungsleitkonturen kann durch unterschiedliche Maßnahmen erzielt werden, wie nach Anspruch 3 durch Gewichte oder Federn, nach Anspruch 4 durch pneumatische, hydraulische oder elektrische Zylinder oder nach Anspruch 5 durch eine mechanische Stützkonstruktion - beispielsweise mit Stützstreben nach Anspruch 6 oder Luftkissen nach Anspruch 7.

Mechanisch auslenkende Reinigungsbewegungen der flexiblen Strömungsleitkonturen können ebenfalls durch unterschiedliche Maßnahmen erzeugt werden. So kann der Strömungsleitkontur gemäß Anspruch 8 wenigstens ein Schwingungserreger zugeordnet sein. Dieser kann die Strömungsleitkontur nach Anspruch 9 kurzzeitig mechanisch entspannen und dann wieder mechanisch verspannen und beispielsweise nach Anspruch 10 als Excenter ausgebildet sein. Stattdessen kann der Schwingungserreger nach Anspruch 11 auch als hydraulischer oder pneumatischer Druckgeber ausgebildet sein. In diesem Zusammenhang kann es bereits genügen, in die zu reinigende Flüssigkeit kurzzeitig Luft einzublasen, um die Strömungsleitkonturen zu Schwingungen anzuregen.

In weiterer Ausgestaltung kann die flexible Strömungsleitkontur nach Anspruch 12 aus Metallfolie, Kunststoffolie oder Gewebe bestehen und nach Anspruch 13 eine Armierung, wie eine Gewebeeinlage, aufweisen. Eine solche Strömungsleitkontur hat bei ausreichender Flexibilität eine genügende Dauerfestigkeit und somit eine große Langlebigkeit.

Ferner ist es nach Anspruch 14 vorteilhaft, die Strömungsleitkontur mit einer Antihaftbeschichtung zu versehen. Hierdurch werden Verschmutzungen sowie Anhaftungen von vornherein weitgehend vermieden und zumindest durch die mechanischen Bewegungen der flexiblen Strömungsleitkontur leichter entfernbar.

Die Erfindung wird nachfolgend an einem zeichnerisch vereinfacht dargestellten Ausführungsbeispiel näher erläutert.

In einem Flotationsbehälter 40 befinden sich drei übereinander angeordnete Flotationsstufen 10, 20, 30 mit jeweils einem Suspensionszulauf 12, 22, 32 und einer oberseitigen, dachartig nach außen und unten geneigten Strömungsleitkontur 14, 24, 34 aus einem in Neigungsrichtung vorgespannten flexiblen Material, wie Metallfolie, Kunststoffolie oder Gewebe. Die flexiblen Strömungsleitkonturen 14, 24, 34 gehen jeweils über ein hiermit verbundenes, festes, sich nach oben verjüngendes, nicht bezeichnetes Übergangsstück in einen zentralen, rohrförmigen, sich nach oben erstrekkenden festen Flotationskamin 18, 28, 38 über. Alle auf gleicher Höhe endenden Flotationskamine 18, 28, 38 sind unter gegenseitigem Abstand konzentrisch zueinander angeordnet und mit den Flotationsräumen 10, 20, 30 über im wesentlichen zentrale Austrittsöffnungen 16, 26, 36 verbunden.

Die unterste Flotationsstufe 10 hat im vorliegenden Fall einen sich nach innen und unten neigenden Boden, der gleichzeitig den Behälterboden 42 des Flotationsbehälters 40 bildet und am unteren Ende einen zum Entfernen von Schwerteilen und Bodensedimenten dienenden Auslaß 44 aufweist.

Jeder Flotationsstufe 10, 20, 30 ist etwa auf gleicher Höhe am Flotationsbehälter 40 ein Klarwasserauslaß 46, 48, 50 zugeordnet, durch den das Klarwasser nach Umlenkung durch eine vom äußeren Rand der Strömungsleitkontur 14, 24, 34 nach unten ragende Trennwand ausströmen kann. Die Trennwände können aus festem Material oder auch aus dem flexiblen Material der Strömungsleitkonturen 14, 24, 34 bestehen.

Die Suspensionszuläufe 12, 22, 32 sind im vorliegenden Fall jeweils ringförmig ausgebildet und im unteren Bereich der Flotationsräume 10, 20, 30 sowie konzentrisch zum Zentrum des Flotationsbehälters 40 angeordnet, so daß eine zum Zentrum allseitig gleichförmige Suspensionszufuhr gewährleistet ist. Bis auf die unterste Flotationsstufe 10 sind die Suspensionszuläufe 22, 32 der oberen Flotationsstufen 20, 30 an den Oberseiten der Übergangsstücke bzw. an den Unterseiten der hiermit verbundenen Flotationskamine 18, 28 und damit an stabilen Geräteteilen befestigt.

Die Strömungsleitkonturen 14, 24, 34 können in einem praktischen Ausführungsbeispiel einen Neigungswinkel von 20 bis 70 Grad haben, insbesondere von 35 bis 55 Grad, und einen gegenseitigen Vertikalabstand von beispielsweise etwa 50 bis 1000 mm aufweisen.

Das über die Suspensionszuläufe 12, 22, 32 in die Flotationsstufen 10, 20, 30 einströmende und dort aufsteigende Flotat, das aus Wasser und Feststoffen mit angelagerten Gas- bzw. Luft-Partikeln besteht, strömt aufgrund des Dichteunterschiedes nach oben gegen die Unterseiten der Strömungsleitkonturen 14, 24, 34. Dort findet eine Trennung in der Weise statt, daß die Feststoffe mit angelagerten Gas- bzw. Luft-Partikeln sowie restlichem Wasser an der Unterseite der Strömungsleitkonturen 14, 24, 34 nach innen und durch die Flotationskamine 18, 28, 38 nach oben strömen. Dort können sie beispielsweise bei einer drucklosen Bauform mit einer nicht dargestellten Förderschnecke abgeschöpft werden oder bei einer mit Überdruck arbeitenden Bauform in einen nicht dargestellten gemeinsamen, oben geschlossenen Flotatraum gelangen und von dort ventilgesteuert abgelassen werden. Das schwerere Klarwasser unterhalb der Unterseiten der Strömungsleitkonturen 14, 24, 34 strömt abwärts nach außen und kann nach Strömungsumlenkung über die Klarwasserauslässe 46, 48, 50 entnommen werden.

Die flexiblen Strömungsleitkonturen 14, 24, 34 können auf irgendeine geeignete Weise in ihrer Neigungsrichtung formstabilisierend vorgespannt sein, beispielsweise gemäß der Darstellung durch Federn 52, Gewichte 54, Excenter 56 oder dergleichen.

Aufgrund ihrer Flexibilität können die Strömungsleitkonturen 14, 24, 34 zum Zwecke ihrer Reinigung kurzzeitig verformt oder in Schwingungen versetzt werden. Das kann beispielsweise mit dem Excenter 56 erfolgen, der das flexible Material jeweils kurzzeitig entspannt und dann wieder verspannt. Auch kann in die Säulenflotationseinrichtung Luft eingeblasen werden, die das flexible Material in Schwingungen versetzt.

Die tatsächliche Form der nach außen und unten geneigten, dachartigen, flexiblen Strömungsleitkonturen 14, 24, 34 ist an sich beliebig. Sie kann zur Vertikalachse eines im Querschnitt beispielsweise kreisrunden Flotationsbehälters 40 beispielsweise rotationssymmetrisch oder auch asymmetrisch ausgebildet sein. Der Querschnitt der Strömungsleitkonturen 14, 24, 34 kann vollständig kreisrund oder auch nur angenähert kreisrund sein - beispielsweise kann der Querschnitt vieleckig, wie zwölfeckig, ausgebildet sein, um ein einfacheres sowie preiswerteres Herstellen und Verspannen zu gewährleisten. Im einfachsten Fall kann jede Strömungsleitkontur aus einer einzigen geneigten Dachebene bestehen. Wichtig ist bei allen Bauformen stets, daß die Strömungsleitkonturen 14, 24, 34 flexibel ausgebildet und somit zum Vermeiden von Anhaftungen sowie Verkrustungen verformbar sind.

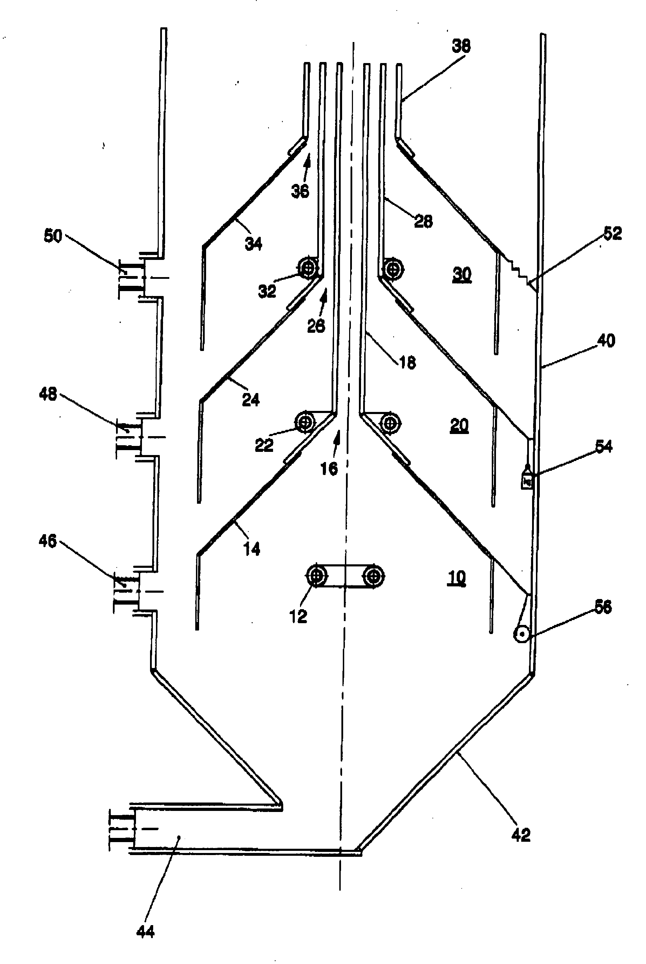

## Patentansprüche

1. Säulenflotationseinrichtung mit zumindest zwei übereinander angeordneten Flotationsstufen (10,20, 30), die jeweils durch eine in einen zentralen Flotationskamin (18, 28, 38) mündende und nach außen abwärts geneigte Strömungsleitkontur (14, 24, 34) voneinander getrennt sind,
**dadurch gekennzeichnet,**
**daß** die Strömungsleitkontur (14, 24, 34) aus einem flexiblen Material besteht.

2. Säulenflotationseinrichtung nach Anspruch 1 **dadurch gekennzeichnet, daß** die Strömungsleitkontur (14, 24, 34) in ihrer Neigungsrichtung mechanisch vorgespannt ist.

3. Säulenflotationseinrichtung nach Anspruch 2, **dadurch gekennzeichnet, daß** die Strömungsleitkontur (14, 24, 34) durch Gewichte (54) oder Federn (52) individuell vorgespannt ist.

4. Säulenflotationseinrichtung nach Anspruch 2, **dadurch gekennzeichnet, daß** die Strömungsleitkontur (14, 24, 34) durch pneumatische, hydraulische oder elektrische Zylinder individuell vorgespannt ist.

5. Säulenflotationseinrichtung nach Anspruch 2, **dadurch gekennzeichnet, daß** die Strömungsleitkontur (14, 24, 34) über eine mechanische Stützkonstruktion aufgespannt ist.

6. Säulenflotationseinrichtung nach Anspruch 5, **dadurch gekennzeichnet, daß** die mechanische Stützkonstruktion Stützstreben aufweist.

7. Säulenflotationseinrichtung nach Anspruch 5 oder 6, **dadurch gekennzeichnet, daß** die mechanische Stützkonstruktion aufblasbare Luftkissen aufweist.

8. Säulenflotationseinrichtung nach einem der Ansprüche 1 bis 7, **dadurch gekennzeichnet, daß** der Strömungsleitkontur (14, 24, 34) wenigstens ein Schwingungserreger (56) zugeordnet ist.

9. Säulenflotationseinrichtung nach Anspruch 8, **dadurch gekennzeichnet, daß** der die Strömungsleitkontur (14, 24, 34) kurzzeitig entspannende und dann wieder verspannende Schwingungserreger (56) mechanisch ausgebildet ist.

10. Säulenflotationseinrichtung nach Anspruch 9, **dadurch gekennzeichnet, daß** der Schwingungserreger (56) als Excenter ausgebildet ist.

11. Säulenflotationseinrichtung nach Anspruch 8, **dadurch gekennzeichnet, daß** der Schwingungserreger als hydraulischer oder pneumatischer Druckgeber ausgebildet ist.

12. Säulenflotationseinrichtung nach einem der Ansprüche 1 bis 11, **dadurch gekennzeichnet, daß** die Strömungsleitkontur (14, 24, 34) aus Metallfolie, Kunststoffolie oder Gewebe besteht.

13. Säulenflotationseinrichtung nach Anspruch 12, **dadurch gekennzeichnet, daß** die aus Kunststoffolie bestehende Strömungsleitkontur (14, 24, 34) eine Armierung, wie eine Gewebeeinlage, aufweist.

14. Säulenflotationseinrichtung nach einem der Ansprüche 1 bis 13, **dadurch gekennzeichnet, daß** die flexible Strömungsleitkontur (14, 24, 34) mit einer Antihaftbeschichtung ausgebildet ist.
